# EUROPEAN PATENT SPECIFICATION

(11) **EP 3 873 201 B1**
(45) Date of publication and mention of the grant of the patent: **15.03.2023**
(21) Application number: 19832749.6
(22) Date of filing: 30.10.2019
(51) Int. Cl.: A01K 5/00

(54) **FEEDING SYSTEM, AND METHOD FOR FEEDING ANIMALS**
SYSTEM UND VERFAHREN ZUM FÜTTERN VON TIEREN
SYSTÈME ET MÉTHODE DE NOURRISSAGE D'ANIMAUX

(30) Priority: 01.11.2018 NL 2021914
(43) Date of publication of application: 08.09.2021
(73) Proprietor: Lely Patent N.V., 3147 PB Maassluis (NL)
(72) Inventor: BLOKLAND, Korstiaan Cornelis, 3147 PB Maassluis (NL); JACOBS, Johannes, 3147PB Maassluis (NL)
(74) Representative: Octrooibureau Van der Lely N.V.
(86) International application number: PCT/NL2019/050713
(87) International publication number: WO 2020/091597

(56) References cited:
- WO-A1-2017/018874
- WO-A1-2017/034397
- US-A1- 2005 193 954

## Description

The invention relates to a feeding system for feeding animals, in particular cows.

An automatic feeding system which is provided with a feed kitchen having a plurality of feed supply places for storing a plurality of feed types for animals is known from WO 2017/018874 A1. A feed loading device loads feed from the feed kitchen according to a predetermined ration into an autonomous feed mixing wagon. The feeding system comprises a control system which is programmed to, for each ration, determine associated feed types and quantities. The control system controls the feed loading device to load the feed from the feed kitchen according to a selected ration into the feed mixing wagon which is stationed beside the feed kitchen. The feed mixing wagon subsequently takes the feed to the animals to be fed. The control system comprises a graphical user interface (GUI) with a display screen. The GUI shows on the display screen a ground plan of the feed kitchen with the feed supply places. The remaining quantity of feed of a feed supply place can be displayed, which is tracked on the basis of the quantity of feed which is removed from a feed supply place in the preparation of the ration. The GUI shows, for example, the remaining quantity of feed of a feed supply place when this has fallen below the quantity required for a ration, i.e. when the feed kitchen has to be replenished and the user has to be notified.

In this automatic feeding system, the management of the feed kitchen is not optimal. The user must himself keep watch on the feed supply. If one or more feed types of the feed kitchen run low, the control system generates an alarm signal for the user. It is desirable to replenish the feed kitchen relatively quickly after the alarm signal. Especially in the case of dairy cows, it is important that feed is continuously present, so that the dairy cows can always eat. If no feed is temporarily available, the milk production and health of the dairy cows can be adversely affected. Regardless of the importance of the alarm signal to alert the user when the feed kitchen has to be replenished, the user perceives this alarm signal as irksome. If the user receives the alarm signal at night, for example, the user, depending on the time of night, will get out of bed to replenish the feed kitchen.

WO 2017/034397 A1 discloses an automatic feeding device comprising a feed kitchen having different feed varieties and a feed fetching device, and a control system for executing a feed composing cycle.

US 2005/193954 A1 discloses a computer network and method for feeding animals in a feedlot.

An object of the invention is to provide a feeding system which makes a more agreeable user experience possible, in particular by reducing the number of alarm signals generated by the feeding system.

This object is achieved according to the invention by a feeding system for feeding animals, in particular cows, such as dairy cows or beef cows, comprising:
- a feed supply system with feed for the animals, which feed comprises one or more feed types,
- an autonomous feeding device for feeding the animals with feed from the feed supply system,
- a feed supply observation system for observing the quantity of feed of the or each feed type in the feed supply system,
- a feed consumption observation system for observing the consumption of feed of the or each feed type from the feed supply system,
- a control system having a memory,

wherein the control system is connected to the feed supply observation system in order to receive values of the observed quantity of feed of the or each feed type in the feed supply system, and
wherein the control system is connected to the feed consumption observation system in order to receive values of the observed consumption of feed of the or each feed type from the feed supply system, in particular over a period of time which is, for example, at least one week or longer, and the control system is configured to store said received values in the memory as historical data, and
wherein the control system is configured to predict the future consumption of feed of the or each feed type from the feed supply system, in particular over a future time period which lies, for example, between 3 and 24 hours, such as 12 hours, on the basis of said historical data stored in the memory, and
wherein the control system is configured to determine for the or each feed type of the feed supply system, on the basis of the values of the observed quantity of feed of said feed type in the feed supply system and the predicted future consumption of feed of said feed type from the feed supply system, an expected period of time until the feed of said feed type in the feed supply system runs low or runs out.

In the feeding system according to the invention, the feed in the feed supply system can comprise a single feed type or a plurality of different feed types, such as an extracted block of silage, a compressed bale, corn, fresh grass, hay, potato fibers, etc., and any arbitrary combination thereof. A ration for a group of animals can consist of a single feed type in a predetermined quantity, or of a mixture of a plurality of feed types which are mixed together in predetermined quantities. One or more rations are stored, for example, in the memory of the control system.

After the user has selected a ration, the feed is taken out of the feed supply system in the quantities according to the selected ration and loaded into the autonomous feeding device, which subsequently takes the feed to the animals to be fed. With the feed supply observation system according to the invention, it is established how much feed and, in the case of a plurality of feed types, how much feed of each feed type is present in the feed supply system. The feed supply observation system is configured to determine the quantity of feed of the or each feed type in the feed supply system on the basis of an observation or measurement of a parameter of said quantity of feed. For example, different feed types lie as heaps in the feed supply system, and the feed supply observation system measures a height, in particular an average height, of each heap of feed, after which the quantity of feed (kg) of each heap is determined on the basis of the measured height. The quantity of feed in the feed supply system is monitored over time.

According to the invention, it is possible that the control system is configured to generate an alarm signal if the observed quantity of feed of at least one feed type in the feed supply system falls below a threshold value. The threshold value is preferably set on the basis of the quantity of feed of each feed type that is required for a ration. If the observed quantity of feed of at least one feed type in the feed supply system falls below the threshold value, this means that the feeding system must be shut down in order to replenish the feed supply system. The alarm signal is, for example, an e-mail or text message to the user.

According to the invention, it is monitored by the feed consumption observation system how much feed and, in the case of a plurality of feed types, how much feed of each feed type, is taken out of the feed supply system and is loaded into the autonomous feeding device. The feed consumption observation system is configured to determine the consumption of feed of the or each feed type from the feed supply system on the basis of an observation or measurement of a parameter of said consumption of feed. For example, the autonomous feeding device is equipped with a weighing device for measuring the weight of the feed which is loaded from the feed supply system into the autonomous feeding device. This weight substantially corresponds to the weight of the feed which is extracted from the feed supply system, i.e. the consumption of feed from the feed supply system. The consumption of feed of the or each feed type can therefore be determined on the basis of the measured weight of the loaded feed. The control system logs the observed values of the consumption of feed and, in the case of a plurality of feed types, the observed values of the consumption of each feed type, over time, i.e. these values are registered and stored as historical data in the memory of the control system.

On the basis of the historical data of the observed consumption of feed and, in the case of a plurality of feed types, of the observed consumption of each feed type, from the feed supply system, the control system makes a prediction of the future consumption of feed and, in the case of a plurality of feed types, the future consumption of each feed type, from the feed supply system, for example for a predetermined future time period, such as for the coming 12 hours.

Subsequently, the control system determines, on the basis of the observed values relating to how much feed and, in the case of a plurality of feed types, how much feed of each feed type, is present in the feed supply system, and the predicted future consumption of feed and, in the case of a plurality of feed types, the predicted future consumption of each feed type, from the feed supply system, an expected period of time until the feed and, in the case of a plurality of feed types, until each feed type, of the feed supply system runs low.

The expected period of time until the feed and, in the case of a plurality of feed types, until each feed type, of the feed supply system runs low indicates how long it still takes until the feed supply system has to be replenished. It is possible, for example, that the control system comprises a display screen, such as the display screen of a computer, laptop, tablet or smartphone of a user of the feeding system, wherein the control system is configured to display on the display screen the expected period of time until the feed and, in the case of a plurality of feed types, until each feed type, in the feed supply system runs low.

This makes the feeding system according to the invention particularly user-friendly. In contrast to the prior art, the user does not himself need to keep watch on the quantity of feed in the feed supply system - this is automatically carried out by the control system of the feeding system according to the invention. In addition, the feeding system according to the invention not only monitors how much feed of the or each feed type is still present in the feed supply system, but also calculates on the basis of historical data how long it takes until the feed supply system runs out.

Because the feeding system according to the invention determines the expected period of time until the feed supply system becomes empty, such as in hours and/or minutes, instead of, for example, only the remaining weight of the feed in the feed supply system, the management of the feed supply system, and, in particular, the planning for the replenishment of the feed supply system, is simple. The user can at a glance establish, for example, whether the feed supply system is sufficiently filled for the coming night. If that is not the case, the user can plan for the replenishment of the feed supply system such that the feeding system generates no alarm signal during the night and the night's rest of the user is not disturbed. The number of alarm signals relating to the running-out of the feed supply system can hereby be considerably reduced.

According to the invention, it is also possible that the control system is configured to determine for each feed type of the feed supply system, on the basis of the values of the observed quantity of feed of said feed type in the feed supply system and the predicted future consumption of feed of said feed type from the feed supply system, an expected quantity of feed of said feed type which is to be added to the feed supply system in order to ensure that the feed of said feed type in the feed supply system runs low only after a preset period of time. For example, the preset period of time is one day or several days - the user can choose this period of time. The control system can be configured to display on the display screen said expected quantity of feed to be replenished, i.e. on the display screen the user can then read off how much feed has to be added in order to bridge the chosen period of time, for example in the form of number of blocks of silage or number of compressed bales.

In an embodiment according to the invention, the feeding system comprises a replenishing device for replenishing feed of at least one feed type in the feed supply system, wherein the control system is connected to the replenishing device and is configured to control the replenishing device on the basis of the expected period of time until the feed of said feed type in the feed supply system runs low. Instead of or in addition to the representation on a display screen of the expected period of time until the feed in the feed supply system runs low, the feed supply system can be automatically replenished by means of the replenishing device. As a result, the feeding system is fully automated.

It is possible that the control system is configured to control the replenishing device, on the basis of the expected period of time until the feed of said feed type in the feed supply system runs low, such that the replenishing device has replenished said feed type in the feed supply system before the quantity of feed of said feed type in the feed supply system becomes less than the threshold value. The feeding system comprises, for example, a feed storage for feed of at least one feed type, i.e. said feed storage comprises one or more feed types which are used in the feeding system, such as silos containing silage, tower silos containing bulk feed or compressed bales. The replenishing device is controlled on the basis of the expected period of time until the feed of one or more feed types in the feed supply system runs low, such that the replenishing device replenishes the feed supply system before the quantity of one of the feed types in the feed supply system becomes less than the threshold value and generates an alarm signal. As a result, the number of alarm signals in the fully automatic feeding system remains limited.

In a preferred embodiment according to the invention, the control system is configured to predict the future consumption of feed of the or each feed type from the feed supply system over a future time period which lies between 3 and 24 hours, preferably between 6 and 18 hours, such as 12 hours. In order to prevent alarm signals relating to the running-out of the feed supply system, a prediction of the future feed consumption up to a day or less in advance is quite sufficient. In addition, the prediction is more accurate as the period in the future becomes shorter. In the feeding system according to the invention, a prediction of approximately 12 hours in advance is optimal.

It is preferred according to the invention that the control system is configured to predict the future consumption of feed of the or each feed type from the feed supply system on the basis of pattern recognition in the historical data of the observed consumption of feed of the or each feed type from the feed supply system. In the pattern recognition according to the invention, use is made, for example, of the historical data which have been gathered over at least two days, one week, one month or several months. For the execution of the pattern recognition, the control system according to the invention can be programmed with a self-learning or machine-learning algorithm. The algorithm is in particular configured to recognize correlations, i.e. statistical relationships, between the historical data stored in the memory, and to predict the future consumption of feed of the or each feed type on the basis of the recognized correlations. In order, for example, to predict the future consumption of feed from the feed supply system for a future time period having a start time and an end time, such as from 6 p.m. to 6 a.m., the pattern recognition is configured to discern repeat patterns of feeding actions in the historical data for periods of times having the same start time and end time. If in the past week, for example, a specific ration was fed each day at approximately 3 a.m., the control system can predict on the basis of the pattern recognition that the same ration will be fed in the coming night, likewise at around 3 a.m. On the basis hereof, the control system can predict the future consumption of feed from the feed supply system.

In one embodiment according to the invention, the feeding device comprises a holder for receiving a batch of feed for the animals, wherein a feed loading device, which is configured to transfer feed of at least one feed type from the feed supply system into the holder of the feeding device, is provided. The autonomous feeding device is configured to move feed in batches from the feed supply system to the animals. The feeding device can be designed in various ways. For example, the feeding device is a self-propelled feed wagon having a plurality of wheels and a drive and steering system for driving and steering the feed wagon. The drive and steering system of the feed wagon comprises at least one electric drive motor and a battery system for storing electrical energy. The drive and steering system can receive navigation data from the control system in order to autonomously travel a desired route from the feed supply system to the animals. However, it is also possible that the feeding device is suspended from a rail which leads from the feed supply system to the animals.

In a preferred embodiment according to the invention, the feed supply system comprises a plurality of feed supply places or feed supply areas, which are located separate from one another and/or next to each other, wherein each feed supply place is configured to receive respectively one feed type, and wherein the feed loading device is provided with a grab, which is fitted so as to be movable in a substantially horizontal plane above the feed supply places, and is substantially vertically movable in order to grab respectively a quantity of feed, i.e. a portion of feed having a predetermined or estimated weight (kg), from one of the feed supply places and to transfer this to the holder of the feeding device so as to load a batch of feed for the animals into said holder. The grab will grab a quantity or portion of feed from one or more of the feed supply places and drop it into the holder several times until a batch of feed for the animals, having the desired quantity and composition, has been formed in the holder.

It is possible that the feed supply observation system is provided with an observation device, which is fitted to the grab in order to observe the quantity of feed of the or each feed type in the feed supply system. The observation device is configured to measure, for example, for each feed supply place, the distance to the highest point of the feed which is present in said feed supply place, wherein the control system is configured to determine, on the basis of said measured distance, the weight (kg) of the feed which is present in said feed supply place. The observation device comprises, for example, a laser or camera, in particular a 3D camera.

According to the invention, it is also possible that the autonomous feeding device for feeding the animals comprises the feed loading device. If the feed loading device has been integrated with the feeding device for feeding the animals, the feeding device, on the basis of a selected ration, can automatically move respectively to one of the feed supply places in order to remove a quantity of feed therefrom and subsequently take it into the holder in order to load a batch of feed for the animals therein.

Instead of or in addition to the feed supply places, the feed supply system can comprise one or more feed supply devices, which are connected to the control system for the control thereof, such as a driven conveyor belt for receiving compressed bales, in combination with a releasing device for releasing feed from a bale, for example a cutter or blade, and/or a trough for bulk feed having an auger for the metered discharge of the feed, and/or a tower silo and/or something else. The feed loading device can be provided with one or more conveyor belts for the movement of the feed from the or each feed supply device into the holder of the autonomous feeding device.

In a preferred embodiment, the feed consumption observation system comprises a weighing device, which is configured to measure the weight of feed accommodated in the holder, wherein the control system is connected to the weighing device in order to receive values of the measured weight of feed accommodated in the holder, and wherein the control system is configured to determine the weight of the or each feed type of said batch of feed for the animals loaded in the holder and, on the basis thereof, to determine the consumption of feed of the or each feed type from the feed supply system.

For example, the autonomous feeding device comprises the weighing device. During the loading of the batch of feed for the animals, the weight of the feed which is transferred from the feed supply system to the holder is measured. If the feed loading device, for example, feeds 60 kg of silage from the feed supply system to the holder, the weighing device measures a corresponding increase of the weight in the holder. The control system thus determines that 60 kg of silage has been consumed from the feed supply system. In this way, the consumption of feed of each feed type from the feed supply system can be measured particularly accurately.

In one embodiment according to the invention, the feed supply system comprises a feed loading place or feed loading station for the stationing of the feeding device when the feed loading device transfers feed of at least one feed type from the feed supply system into the holder of the feeding device, wherein the feeding system comprises at least one feed fence for the feeding of the animals, and wherein the feeding device is configured to autonomously move a batch of feed for the animals accommodated in the holder, from the feed loading place to the feed fence, and to autonomously dispense said feed along the feed fence. The autonomous feeding device makes fully automatic feeding possible.

In one particular preferred embodiment according to the invention, the feed consumption observation system comprises a sensor device, which is preferably fitted to the feeding device, wherein the sensor device is configured to measure the quantity of feed which is present along a feed fence, wherein the control system is configured to receive values of the measured quantity of feed which is present along the feed fence. For example, the sensor device comprises a laser for measuring the feed height along the feed fence. From the measured quantity of feed which is present along the feed fence, the control system can derive a feed requirement at said feed fence. The control system can be configured to control the feed loading device to prepare a new batch of feed for the animals on the basis of said received values of the measured quantity of feed which is present along the feed fence. It is also possible that the control system according to the invention is configured to determine the consumption of feed of the or each feed type from the feed supply system on the basis of said received values of the measured quantity of feed which is present along the feed fence. Such a determination of the consumption of feed of each feed type from the feed supply system is indirect.

The invention further relates to a method for feeding animals, in particular cows, such as dairy cows or beef cows, by means of a feeding system such as described above.

The invention will now be explained in greater detail with reference to the accompanying figures.
Figure 1 shows a schematic top view of a feeding system according to the invention.
Figure 2 shows a graph illustrating repeat patterns of feeding actions.
Figure 3 shows schematically a display screen of a control system of the feeding system illustrated in figure 1.

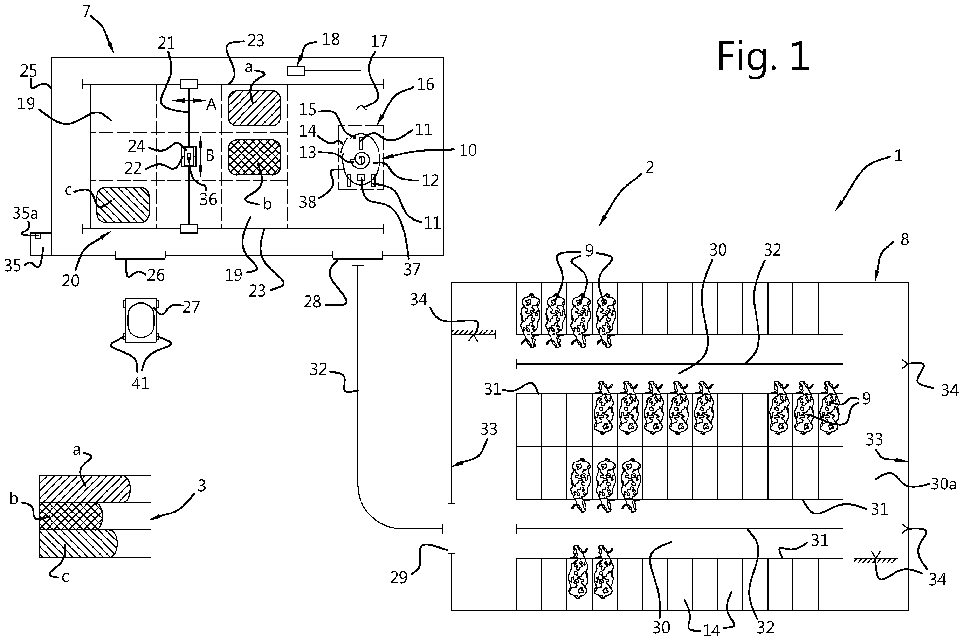

The feeding system for feeding animals, in particular cows, such as dairy cows or beef cows, is in figure 1 denoted in its entirety by 1. The feeding system 1 is installed in an operating area 2. The feeding system 1 comprises a feed storage 3 containing a plurality of feed types a, b, c, a feed supply system 7 having the same feed types a, b, c, a shed 8 containing the animals 9, and an autonomous feeding device 10 for feeding the animals 9 with feed from the feed supply system 7. Although the feed storage 3 represented schematically in figure 1 comprises three adjacent silos containing feed types a, b, c, for example silage, the feed storage 3 can comprise further storage devices and/or feed types, such as tower silos containing bulk feed, for example corn, potatoes and/or beets, or compressed bales. In the same way, the feed supply system 7 can also contain more than the three feed types a, b, c shown in figure 1. Obviously, in the operating area 2 may also be found a house, one or more further sheds, barns and other buildings (not shown).

The autonomous feeding device 10 for feeding the animals 9 is in this illustrative embodiment designed as a self-propelled feed wagon. Obviously, it is possible according to the invention that the feeding system 1 comprises more than one autonomous feed wagon 10, in particular two autonomous feed wagons 10 (not shown). The feed wagon 10 is movable with wheels 11 over a floor, farmyard or other ground surface. The feed wagon 10 comprises a holder 12 for receiving feed and a mixing device 13 for cutting and/or mixing said feed. For the delivery of the feed from the holder 12, a dispensing device 14 is provided. The dispensing device 14 comprises, for example, a door, which is movable between a closed and open position.

The feed wagon 10 is autonomously movable by means of a drive and steering system for driving and steering the feed wagon 10 (not shown). The drive and steering system of the feed wagon 10 is controllable by a control unit 15 of the feed wagon 10. In this illustrative embodiment, the drive and steering system comprises for each rear wheel 11 respectively an electric drive motor (not shown). The electric drive motors of the rear wheels 11 are controllable independently of one another. By controlling the speed of revolution of the rear wheels 11, the feed wagon 10 can travel straight ahead, straight back, or round a bend.

The drive and steering system comprises a battery system for storing electrical energy (not shown). The battery system is connected to the electric drive motors. In figure 1, the feed wagon 10 is stationed at a feed loading place or feed loading station 16, in which the holder 12 of the feed wagon 10 is filled with feed. The feed loading place 16 comprises a charging point 17 of a charging system 18 for charging the battery system of the feed wagon 10. The feed loading place 16 therefore also forms a charging station. The control unit 15 of the feed wagon 10 is configured to control the mixing device 13 such that the mixing device 13 mixes the feed accommodated in the holder 12 while the feed wagon 10 is connected to the charging point 17 and the battery system of the feed wagon 10 is being charged by means of the charging system 18.

The feed supply system 7 comprises in this illustrative embodiment a feed kitchen. The feed kitchen comprises a number of feed supply places or feed supply areas 19 for containing the feed types a, b, c and possibly further feed types (not shown). The feed supply places 19 are arranged separate from one another - the feed supply places 19 are formed, for example, by marked bays or areas on a floor, on which a block of silage or a compressed bale is accommodated. Also one or more of the feed supply places 19 can comprise a trough for receiving bulk feed, such as corn, potatoes or beets. The capacity of the feed supply system 7 is limited to a number of days. The quantities of feed of feed types a, b, c which can be received in the feed supply system 7 are less than the quantities of feed of said feed types a, b, c which are stored in the feed storage 3.

A feed loading device 20 is provided for transferring feed from the feed supply system 7 to the holder 12 of the feed wagon 10 when the feed wagon 10 is stationed at the feed loading place 16. The feed loading device 20 comprises in this illustrative embodiment a mobile carrier rail 21, which is movably fitted (see arrow A) on two fixed carrier rails 23 which are fitted in parallel and at a distance apart. The mobile carrier rail 21 comprises a trolley 22 which is movable along it (see arrow B). The trolley 22 is provided with a vertically movable grab 24 in order to grab feed from the feed supply places 19. The grab 24 suspended from the trolley can move in a substantially horizontal plane to above each of the feed supply places 19.

After the grab 24 has taken a quantity of feed out of one of the feed supply places 19, the grab 24 can move said feed to above the holder 12 of the feed wagon 10 and then drop it into the holder 12. By transferring several feed types to the holder 12 of the feed wagon 10, a batch of mixed feed of feed types according to a desired ration, i.e. a batch of mixed feed (kg) of feed types in a desired ratio, is formed in said holder. Incidentally, the feed loading device could also be integrated with the feed wagon 10. In that case, the feed loading device of the feed wagon 10 loads the holder 12 with feed in the desired quantity and composition.

Obviously, the feed supply system 7 can also be designed differently. Instead of or in addition to the feed supply places 19 shown in figure 1, the feed supply system 7 can comprise one or more other feed supply devices, such as a driven conveyor belt for receiving compressed bales in combination with a releasing device for releasing feed from a bale, for example a cutter or blade, and/or a trough for bulk feed having an auger for the metered discharge of the feed, and/or a tower silo and/or something else. The feed loading device can be provided with one or more driven conveyor belts for moving the feed from the or each feed supply device into the holder 12 of the feed wagon 10.

In addition, it is possible that the feed is not mixed and/or cut in the holder 12 of the feed wagon 10, but in a stationary mixer, which is arranged beside the feed supply system 7 (not shown). In that case, the grab 24 loads a batch of feed from the feed supply system 7 into the stationary mixer. After the mixing and/or cutting by means of the stationary mixer, the mixed feed is subsequently loaded into the feed wagon 10. In this case, no mixing device has to be installed in the holder 12 of the feed wagon 10.

The feed supply system 7 is surrounded by a safety fence 25. In the safety fence 25 is fitted an access door 26, so that a replenishing device 27 can enter the feed supply system 7 via the access door 26 in order to replenish the feed supply places 19 with the various feed types a, b, c from the feed storage 3. In addition, the safety fence 25 comprises a pass-through door 28 for the feed wagon 10. The feed wagon 10 can travel via the pass-through door 28 in and out of the feed supply system 7. Obviously, it is possible that the safety fence 25 comprises just one door, whereby both the feed wagon 10 and the replenishing device 27 can move in and out of the feed supply system 7.

The feeding system 1 can comprise, in addition to the safety fence 25, further safety facilities, for example an emergency stop with which the feed wagon 10 and/or the feed loading device 20 is immediately halted. In this case, an alarm can go off, for example, and/or a message can be sent to a user, such as an e-mail or a text message.

The shed 8 comprises a door opening 29, through which the feed wagon 10 can travel into and out of the shed 8. The door opening 29 can be closed off by a shed door, which preferably can be opened automatically. The shed 8 has in this illustrative embodiment two feed alleys 30. Obviously, more or fewer feed alleys can be provided. In this illustrative embodiment, each feed alley 30 is bounded on both sides by a feed fence 31. Each feed alley 30 comprises a plurality of feeding places or feeding stalls for the feeding of the animals 9. Viewed from the feed alley 30, the feeding places are located behind the feed fence 31. The feeding places extend substantially transversely with respect to the feed alley 30. The animals 19 stand with their head toward the feed alley 30 and can stick their head through the feed fence 31 in order to feed on feed which is deposited along the feed fence 31 by the feed wagon 10.

The feed fences 31 in the shed 8 are situated at a distance from the feed loading place 16 of the feed supply system 7. The feed fences 31 are each accessible from the feed loading place 16 by the feed wagon 10. In the operating area 2, various beacons are installed. The beacons are in this illustrative embodiment formed by strips 32 fitted in or on a floor or other ground surface, walls 33 of the shed 8 and impact points 34. The feed wagon 10 comprises a sensor system (not shown), which is configured to interact with the beacons 32, 33, 34. In addition, the feed wagon 10 comprises a gyroscope (not shown) in order to travel straight ahead over a predetermined distance. The gyroscope is connected to the control unit 15 of the feed wagon 10.

The feeding system 1 comprises a control system 35 having a memory 35a in which data are stored, such as navigation data, ration data and operating data. The navigation data comprise beacon data of the beacons 32, 33, 34. On the basis of the navigation data, the feed wagon 10 is capable of following various routes from the feed loading place 16 to and through the shed 8. The ration data comprise a plurality of rations for the animals 9. Each ration is determined by a total quantity of feed and the composition thereof, for example the total quantity of feed in kg and the recipe (ratio between different feed types) in kg per feed type. The operating data comprise, for example, operating data for operating the dispensing device 14 of the feed wagon 10. Although the control system 35 is schematically illustrated on the left in figure 1, the control system 35 could also be installed at another location.

The feed wagon 10 comprises a sensor device 38 for measuring the quantity of feed which is present along the feed fence 31 along which the feed wagon 10 travels. The control system 35 is configured to receive values of the measured quantity of feed along each feed fence 31. The control system 35 is configured to prepare a following batch of feed on the basis of the measured quantities of feed along each feed fence 31. The control system 35 controls the feed wagon 10 and the feed loading device 20 such that a new batch of feed is deposited before the animals 9 have completely eaten up the feed, i.e. the control system 35 guarantees that feed is always present along each feed fence 31. The feeding system 1 is thus fully, or almost fully automated.

The control system 35 is configured to generate an alarm signal if the observed quantity of feed of at least one feed type a, b, c in the feed supply system 7 falls below a threshold value. The threshold value is preferably set on the basis of the quantity of feed of each feed type a, b, c that is required for a ration. If the observed quantity of feed of at least one feed type a, b, c in the feed supply system 7 falls below the threshold value, this means that the feeding system 1 must be shut down in order to replenish the feed supply system 7. The alarm signal is, for example, an e-mail or text message to the user.

In the feeding system 1 according to the invention, the number of alarm signals, however, remains limited. The feeding system 1 according to the invention is configured to indicate the expected period of time until the feed supply system 7 is to be replenished, i.e. when the remaining quantity of feed of one or more feed types in the feed supply places 19 of the feed supply system 7 is less than the quantity of feed of said feed type that is required for a ration. As a result, the user of the feeding system 1 can plan better for the replenishment of the feed supply system.

In order to determine the expected period of time until the replenishment of the feed supply system 7, the feeding system 1 comprises a feed supply observation system for observing the quantity of feed of each feed type in the feed supply system 7. In this illustrative embodiment, the feed supply observation system comprises an observation device 36, which is fitted to the grab 24, in particular a laser or a camera, such as a camera for creating three-dimensional images. The observation device 36 is configured, for example, to measure for each feed supply place 19 the distance (cm) to the highest point of the feed which is present in said feed supply place 19. The observation device 36 is connected to the control system 35.

The grab 24 is controlled by the control system 35 on the basis of the ration data of the selected ration such that the selected ration is placed into the holder 12 of the feed wagon 10 while the feed wagon 10 is stationed at the feed loading place 16. On the basis of the ration data of the selected ration, the grab 24 takes quantities of the feed types a, b, c out of the feed supply places 19 to the holder 12 of the feed wagon 10 such that the selected ration is received in the holder 10.

While the grab 24 is compiling a batch of feed according to a desired ration in the holder 12 of the feed wagon 10, the grab 24 moves above the feed supply places 19. On the basis of the measured distance to the highest point of the feed present in each feed supply place 19, the control system 35 can determine the weight (kg) of the remaining quantity of feed in said feed supply place 19. After all, the height of the floor of the feed supply places 19 is known, so that the control system 35 can convert the measured distance into the height (cm) of the remaining feed in said feed supply place 19. On the basis of said height and the relationship between height and weight for each feed type (kg/cm), the control system 35 can then determine the weight (kg) of the remaining quantity of feed in each feed supply place 19.

The feeding system 1 comprises a feed consumption observation system for observing the consumption of feed of each feed type from the feed supply system 7. In this illustrative embodiment, the feed consumption observation system comprises a weighing device 37, which is fitted to the feed wagon 10 and is configured to measure the weight (kg) of feed which is received in the holder 12. The weighing device 37 is connected to the control system 35. During the loading of a batch of feed into the holder 12 of the feed wagon 10, the control system 35 monitors how much feed (kg) of each feed type a, b, c is extracted by the grab 24 from the feed supply system 7, and at what time.

Suppose that a ration of 200 kg of feed type a, 200 kg of feed type b, and 100 kg of feed type c (total feed batch 500 kg) is loaded into the holder 12. In this case, the grab 24 first grabs feed repeatedly from the feed supply place 19 containing feed type a. If the grab, for example, takes a portion of 60 kg of feed type a from the feed supply place 19 and subsequently delivers it into the holder 12, the weighing device 37 measures a weight increase of 60 kg. The measured values are passed on to the control system 35 and stored in the memory. The control system 35 therefore logs the observed values of the consumption of each feed type a, b, c over time, i.e. said values are registered and stored as historical data in the memory of the control system 35.

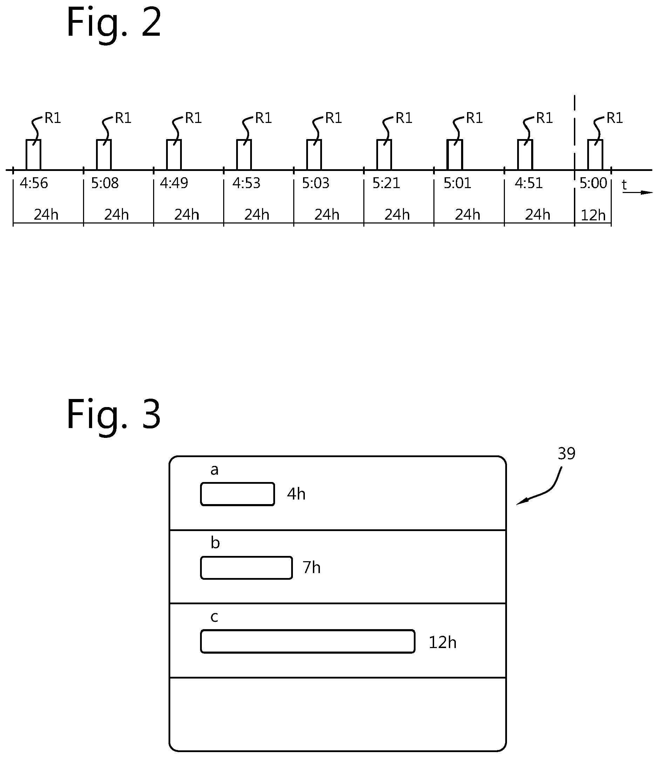

On the basis of the historical data of the observed consumption of each feed type a, b, c from the feed supply system 7, for example over a week, a month or longer, the control system 35 makes a prediction of the future consumption of each feed type a, b, c from the feed supply system 7 for a predetermined future time period, such as for the coming 12 hours. If during the past week, for example, a specific ration R1 has been made each day at approximately 5 a.m., this being stored in the memory as historical data, the control system 35 can predict on the basis of pattern recognition in the historical data that the same ration R1 will be newly prepared the following night at 5 a.m. This is represented schematically in figure 2, in which the vertical dotted line represents the time of making the prediction. Obviously, the historical data comprise large quantities of data of a plurality of rations over time, i.e. much more than the data which are shown schematically in figure 2. In larger quantities of data too, the control system 35 can discern repeat patterns. In this way, the control system 35 can predict the future consumption of feed of each feed type a, b, c from the feed supply system 7.

Subsequently, the control system 35 determines an expected period of time until each feed type a, b, c of the feed supply system 7 runs low on the basis of the observed values relating to how much feed (kg) of each feed type a, b, c is present in the feed supply system 7 and the predicted future consumption of each feed type a, b, c from the feed supply system 7. The expected period of time until each feed type a, b, c of the feed supply system 7 runs low indicates how long it will be before the feed supply system 7 has to be replenished.

As represented in figure 3, the control system 35 comprises a display screen 39, such as the display screen of a computer, laptop, tablet or smartphone of a user of the feeding system 1. The control system 35 is configured to display on the display screen 39 the expected period of time until the feed of each feed type a, b, c in the feed supply system 7 runs low. The user of the feeding system 1 can therefore see with a glance when the feed supply system 7 will have to be replenished and can easily plan for this. The risk is minimal that the feed supply system 7 runs out, i.e. that one or more feed types a, b, c are used up without early warning to the user.

Instead of or in addition to the representation of the expected period of time until the feed of each feed type a, b, c in the feed supply system 7 runs low, the control system 35 can be configured to generate an attention signal if the expected period of time until one of the feed types a, b, c is used up is shorter than a period of time set by the user, for example two hours. The attention signal is, for example, an e-mail or text message to the user. The user can subsequently in good time replenish the feed supply system 7 with the replenishing device 27. The replenishing device 27 comprises, for example, a silage cutter or other device, coupled to a tractor, which is operable by a person (not shown).

The replenishing device 27 shown in figure 1 is configured to automatically replenish feed of the feed types a, b, c in the feed supply system 7. The replenishing device is in this illustrative embodiment formed by a self-propelled replenishing wagon 27 having a plurality of wheels 41 and a drive and steering system for driving and steering the replenishing wagon (not shown). The drive and steering system of the replenishing wagon 27 comprises an electric drive motor and a battery system for storing electrical energy. The drive and steering system can receive navigation data from the control system 35 in order to travel autonomously from the feed storage 3 to the feed supply system 7. It is also possible that the replenishing device 7 is suspended from a rail which leads from the feed storage 3 to the feed supply system 7. In addition, the autonomous replenishing device 27 can comprise other devices, such as a silage device, and/or driven conveyor belts, which can be controlled by the control system 35 to move one or more feed types a, b, c from the feed storage 3 automatically to the feed supply system 7 (not shown).

The control system 35 is configured to control the replenishing device 27 on the basis of the expected period of time until the feed of one or more feed types a, b, c in the feed supply system 7 runs low. For example, the replenishing device 27 is configured to automatically replenish the feed supply system 7 such that each feed type a, b, c in the feed supply system 7 is replenished before the quantity of feed of said feed type a, b, c becomes less than a threshold value. The feeding system is hence fully automated.

The invention is not limited to the illustrative embodiment represented in the figures. The person skilled in the art can make various adaptations which lie within the scope of the invention. For example, the consumption of the feed types a, b, c from the feed supply system 7 can be determined on the basis of historical values of the measured quantity of feed which is situated along each feed fence 30, instead of on the basis of the measured weight of the feed accommodated in the holder 12 as a batch of feed is loaded therein. The decrease in the quantity of feed at the feed fence is a measure of the consumption of feed at said feed fence, and hence the consumption of feed from the feed supply system. In this case, the feed consumption observation system comprises the sensor device 38 of the feed wagon 10, and the consumption of feed from the feed supply system 7 is indirectly determined.

## Claims

1. A feeding system for feeding animals (9), in particular cows, comprising:
- a feed supply system (7) with feed for the animals (9), which feed comprises at least one feed type (a, b, c),
- an autonomous feeding device (10) for feeding the animals (9) with feed from the feed supply system (7),
- a feed supply observation system for observing the quantity of feed of each feed type (a, b, c) in the feed supply system (7),
- a feed consumption observation system for observing the consumption of feed of each feed type (a, b, c) from the feed supply system (7),
- a control system (35) having a memory (35a),
wherein the control system (35) is connected to the feed supply observation system in order to receive values of the observed quantity of feed of each feed type (a, b, c) in the feed supply system (7), and
wherein the control system (35) is connected to the feed consumption observation system in order to receive values of the observed consumption of feed of each feed type (a, b, c) from the feed supply system (7), and the control system (35) is configured to store said received values in the memory (35a) as historical data, and
wherein the control system (35) is configured to predict the future consumption of feed of each feed type (a, b, c) from the feed supply system (7) on the basis of said historical data stored in the memory (35a), and
wherein the control system (35) is configured to determine for each feed type (a, b, c) of the feed supply system (7), on the basis of the values of the observed quantity of feed of said feed type (a, b, c) in the feed supply system (7) and the predicted future consumption of feed of said feed type (a, b, c) from the feed supply system (7), an expected period of time until the feed of said feed type (a, b, c) in the feed supply system (7) runs low.

2. The feeding system as claimed in claim 1, wherein the control system (35) comprises a display screen (39), and wherein the control system (35) is configured to display on the display screen (39) the expected period of time until the feed of said feed type (a, b, c) in the feed supply system (7) runs low.

3. The feeding system as claimed in claim 1 or 2, wherein the control system (35) is configured to determine for each feed type (a, b, c) of the feed supply system (7), on the basis of the values of the observed quantity of feed of said feed type (a, b, c) in the feed supply system (7) and the predicted future consumption of feed of said feed type (a, b, c) from the feed supply system (7), an expected quantity of feed of said feed type (a, b, c) which is to be added to the feed supply system (7) in order to ensure that the feed of said feed type (a, b, c) in the feed supply system (7) runs low only after a preset period of time.

4. The feeding system as claimed in one or more of the preceding claims, wherein the control system (35) is configured to generate an alarm signal if the observed quantity of feed of at least one feed type (a, b, c) in the feed supply system (7) falls below a threshold value.

5. The feeding system as claimed in one or more of the preceding claims, wherein the feeding system (1) is provided with a replenishing device (27) for replenishing feed of at least one feed type (a, b, c) in the feed supply system (7), and wherein the control system (35) is connected to the replenishing device (27) and is configured to control the replenishing device (27) on the basis of the expected period of time until the feed of said feed type (a, b, c) in the feed supply system (7) runs low.

6. The feeding system as claimed in claim 4 and 5, wherein the control system (35) is configured to control the replenishing device (27), on the basis of the expected period of time until the feed of said feed type (a, b, c) in the feed supply system (7) runs low, such that the replenishing device (27) has replenished said feed type (a, b, c) in the feed supply system (7) before the quantity of feed of said feed type (a, b, c) in the feed supply system (7) becomes less than the threshold value.

7. The feeding system as claimed in one or more of the preceding claims, wherein the control system (35) is configured to predict the future consumption of feed of each feed type (a, b, c) from the feed supply system (7) over a future time period which lies between 3 and 24 hours, preferably between 6 and 18 hours, such as 12 hours.

8. The feeding system as claimed in one or more of the preceding claims, wherein the control system (35) is configured to predict the future consumption of feed of each feed type (a, b, c) from the feed supply system (7) on the basis of pattern recognition in the historical data of the observed consumption of feed of each feed type (a, b, c) from the feed supply system (7).

9. The feeding system as claimed in one or more of the preceding claims, wherein the feeding device (10) is provided with a holder (12) for receiving a batch of feed for the animals, and wherein a feed loading device (20), which is configured to transfer feed of at least one feed type (a, b, c) from the feed supply system (7) into the holder (12) of the feeding device (10), is provided.

10. The feeding system as claimed in one or more of the preceding claims, wherein the feed supply system (7) is provided with a plurality of feed supply places (19), which are located separate from one another, wherein each feed supply place (19) is configured to receive respectively one feed type (a, b, c), and wherein the feed loading device (20) is provided with a grab (24), which is arranged so as to be movable in a substantially horizontal plane above the feed supply places (19), and is substantially vertically movable in order to grab respectively a quantity of feed from one of the feed supply places (19) and to transfer this to the holder (12) of the feeding device (10) for the loading of a batch of feed for the animals (9) into said holder.

11. The feeding system as claimed in claim 10, wherein the feed supply observation system is provided with an observation device (36), which is arranged to the grab (24) in order to observe the quantity of feed of each feed type (a, b, c) in the feed supply system (7).

12. The feeding system as claimed in claim 11, wherein the observation device is configured to measure, for each feed supply place (19), the distance to the highest point of the feed which is present in said feed supply place (19), and wherein the control system (35) is configured to determine, on the basis of said measured distance, the weight of the feed which is present in said feed supply place (19).

13. The feeding system as claimed in one or more of claims 9-12, wherein the feed consumption observation system is provided with a weighing device (37), which is configured to measure the weight of feed accommodated in the holder (12), wherein the control system (35) is connected to the weighing device (37) in order to receive values of the measured weight of feed accommodated in the holder (12), and wherein the control system (35) is configured to determine the weight of each feed type (a, b, c) of the batch of feed for the animals (9) loaded in the holder (12) and, on the basis thereof, to determine the consumption of feed of each feed type (a, b, c) from the feed supply system (7).

14. The feeding system as claimed in one or more of claims 9-13, wherein the feed supply system (7) is provided with a feed loading place (16) for the stationing of the feeding device (10) when the feed loading device (20) transfers feed of at least one feed type (a, b, c) from the feed supply system (7) into the holder (12) of the feeding device (10), and wherein the feeding system (1) comprises at least one feed fence (30) for the feeding of the animals (9), and wherein the feeding device (10) is configured to autonomously move a batch of feed for the animals (9) accommodated in the holder (12), from the feed loading place (16) to the feed fence (30), and to autonomously dispense said feed along the feed fence (30).

15. The feeding system as claimed in one or more of the preceding claims, wherein the feed consumption observation system is provided with a sensor device (38) which is configured to measure the quantity of feed which is situated along a feed fence (30), and wherein the control system (35) is configured to receive values of the measured quantity of feed which is situated along said feed fence (30), and wherein the control system (35) is configured to determine the consumption of feed of each feed type (a, b, c) from the feed supply system (7) on the basis of said received values of the measured quantity of feed which is situated along said feed fence (30).

16. The feeding system as claimed in one or more of the preceding claims, comprising a feed storage (3) for feed of at least one feed type (a, b, c), wherein the quantity of feed of each feed type (a, b, c) in the feed storage (3) is greater than the quantity of feed of said feed type (a, b, c) in the feed supply system (7), and wherein the feeding system is configured to replenish feed of each feed type (a, b, c) in the feed supply system (7) with feed of said feed type (a, b, c) from the feed storage (7).

17. A method for feeding animals, in particular cows, by means of a feeding system (1) as claimed in one or more of the preceding claims.

## Patentansprüche

1. Fütterungssystem zum Füttern von Tieren (9), insbesondere von Kühen, umfassend:
- ein Futtervorratssystem (7) mit Futter für die Tiere (9), das mindestens eine Futterart (a, b, c) umfasst,
- eine autonome Fütterungsvorrichtung (10) zum Füttern der Tiere (9) mit Futter aus dem Futtervorratssystem (7),
- ein Futtervorratsbeobachtungssystem zur Beobachtung der Futtermenge jeder Futterart (a, b, c) im Futtervorratssystem (7),
- ein Futterverbrauchsbeobachtungssystem zur Beobachtung des Futterverbrauchs jeder Futterart (a, b, c) aus dem Futtervorratssystem (7),
- ein Steuerungssystem (35) mit einem Speicher (35a),
wobei das Steuerungssystem (35) mit dem Futtervorratsbeobachtungssystem verbunden ist, um Werte der beobachteten Futtermenge jeder Futterart (a, b, c) im Futtervorratssystem (7) zu empfangen, und
wobei das Steuerungssystem (35) mit dem Futterverbrauchsbeobachtungssystem verbunden ist, um Werte des beobachteten Futterverbrauchs jeder Futterart (a, b, c) aus dem Futtervorratssystem (7) zu empfangen, und das Steuerungssystem (35) dazu ausgelegt ist, die empfangenen Werte in dem Speicher (35a) als historische Daten zu speichern, und
wobei das Steuerungssystem (35) dazu ausgelegt ist, den künftigen Futterverbrauch jeder Futterart (a, b, c) aus dem Futtervorratssystem (7) basierend auf den in dem Speicher (35a) gespeicherten historischen Daten vorherzusagen, und
wobei das Steuerungssystem (35) dazu ausgelegt ist, für jede Futterart (a, b, c) des Futtervorratssystems (7) basierend auf den Werten der beobachteten Futtermenge der Futterart (a, b, c) im Futtervorratssystem (7) und des vorhergesagten zukünftigen Futterverbrauchs der Futterart (a, b, c) aus dem Futtervorratssystem (7) eine voraussichtliche Zeitspanne zu bestimmen, bis das Futter der Futterart (a, b, c) im Futtervorratssystem (7) zur Neige geht.

2. Fütterungssystem gemäß Anspruch 1, wobei das Steuerungssystem (35) einen Anzeigebildschirm (39) umfasst und wobei das Steuerungssystem (35) dazu ausgelegt ist, auf dem Anzeigebildschirm (39) die voraussichtliche Zeitspanne anzuzeigen, bis das Futter der Futterart (a, b, c) in dem Futtervorratssystem (7) zur Neige geht.

3. Fütterungssystem gemäß Anspruch 1 oder 2, wobei das Steuerungssystem (35) dazu ausgelegt ist, für jede Futterart (a, b, c) des Futtervorratssystems (7) basierend auf den Werten der beobachteten Futtermenge der Futterart (a, b, c) in dem Futtervorratssystem (7) und des vorhergesagten künftigen Futterverbrauchs der Futterart (a, b, c) aus dem Futtervorratssystem (7) eine voraussichtliche Futtermenge der Futterart (a, b, c) zu bestimmen, die dem Futtervorratssystem (7) zuzuführen ist, um sicherzustellen, dass das Futter der Futterart (a, b, c) in dem Futtervorratssystem (7) erst nach einer voreingestellten Zeitspanne zur Neige geht.

4. Fütterungssystem gemäß einem oder mehreren der vorhergehenden Ansprüche, wobei das Steuerungssystem (35) dazu ausgelegt ist, ein Alarmsignal zu erzeugen, wenn die beobachtete Futtermenge mindestens einer Futterart (a, b, c) in dem Futtervorratssystem (7) einen Schwellenwert unterschreitet.

5. Fütterungssystem gemäß einem oder mehreren der vorhergehenden Ansprüche, wobei das Fütterungssystem (1) mit einer Nachfüllvorrichtung (27) zum Nachfüllen von Futter mindestens einer Futterart (a, b, c) im Futtervorratssystem (7) versehen ist, und wobei das Steuerungssystem (35) mit der Nachfüllvorrichtung (27) verbunden und dazu ausgelegt ist, die Nachfüllvorrichtung (27) basierend auf der voraussichtlichen Zeitspanne zu steuern, bis das Futter der Futterart (a, b, c) im Futtervorratssystem (7) zur Neige geht.

6. Fütterungssystem gemäß Anspruch 4 und 5, wobei das Steuerungssystem (35) dazu ausgelegt ist, die Nachfüllvorrichtung (27) basierend auf der voraussichtlichen Zeitspanne, bis das Futter der Futterart (a, b, c) in dem Futtervorratssystem (7) zur Neige geht, so zu steuern, dass die Nachfüllvorrichtung (27) die Futterart (a, b, c) in dem Futtervorratssystem (7) nachgefüllt hat, bevor die Futtermenge der Futterart (a, b, c) in dem Futtervorratssystem (7) den Schwellenwert unterschreitet.

7. Fütterungssystem gemäß einem oder mehreren der vorhergehenden Ansprüche, wobei das Steuerungssystem (35) dazu ausgelegt ist, den zukünftigen Futterverbrauch jeder Futterart (a, b, c) aus dem Futtervorratssystem (7) über einen zukünftigen Zeitraum vorherzusagen, der zwischen 3 und 24 Stunden, vorzugsweise zwischen 6 und 18 Stunden, wie beispielsweise 12 Stunden, liegt.

8. Fütterungssystem gemäß einem oder mehreren der vorhergehenden Ansprüche, wobei das Steuerungssystem (35) dazu ausgelegt ist, den zukünftigen Futterverbrauch jeder Futterart (a, b, c) aus dem Futtervorratssystem (7) basierend auf Mustererkennung in den historischen Daten des beobachteten Futterverbrauchs jeder Futterart (a, b, c) aus dem Futtervorratssystem (7) vorherzusagen.

9. Fütterungssystem gemäß einem oder mehreren der vorhergehenden Ansprüche, wobei die Fütterungsvorrichtung (10) mit einem Halter (12) zur Aufnahme einer Futtercharge für die Tiere versehen ist, und wobei eine Futterladevorrichtung (20) vorgesehen ist, die dazu ausgelegt ist, Futter mindestens einer Futterart (a, b, c) aus dem Futtervorratssystem (7) in den Halter (12) der Fütterungsvorrichtung (10) zu überführen.

10. Fütterungssystem gemäß einem oder mehreren der vorhergehenden Ansprüche, wobei das Futtervorratssystem (7) mit einer Vielzahl von Futtervorratsplätzen (19) versehen ist, die getrennt voneinander angeordnet sind, wobei jeder Futtervorratsplatz (19) dazu ausgelegt ist, jeweils eine Futterart (a, b, c) aufzunehmen, und wobei die Futterladevorrichtung (20) mit einem Greifer (24) versehen ist, der so angeordnet ist, dass er in einer im Wesentlichen horizontalen Ebene über den Futtervorratsplätzen (19) bewegbar ist und im Wesentlichen vertikal bewegbar ist, um jeweils eine Futtermenge aus einem der Futtervorratsplätze (19) zu ergreifen und diese zu dem Halter (12) der Fütterungsvorrichtung (10) zu überführen, um eine Futtercharge für die Tiere (9) in den Halter zu laden.

11. Fütterungssystem gemäß Anspruch 10, wobei das Futtervorratsbeobachtungssystem mit einer Beobachtungsvorrichtung (36) versehen ist, die am Greifer (24) angeordnet ist, um die Futtermenge jeder Futterart (a, b, c) im Futtervorratssystem (7) zu beobachten.

12. Fütterungssystem gemäß Anspruch 11, wobei die Beobachtungsvorrichtung dazu ausgelegt ist, für jeden Futtervorratsplatz (19) den Abstand zum höchsten Punkt des Futters zu messen, das sich an dem Futtervorratsplatz (19) befindet, und wobei das Steuerungssystem (35) dazu ausgelegt ist, basierend auf dem gemessenen Abstand das Gewicht des Futters zu bestimmen, das sich an dem Futtervorratsplatz (19) befindet.

13. Fütterungssystem gemäß einem oder mehreren der Ansprüche 9-12, wobei das Futterverbrauchsbeobachtungssystem mit einer Wiegevorrichtung (37) versehen ist, die dazu ausgelegt ist, das Gewicht des im Halter (12) untergebrachten Futters zu messen, wobei das Steuerungssystem (35) mit der Wiegevorrichtung (37) verbunden ist, um Werte des gemessenen Gewichts des im Halter (12) untergebrachten Futters zu empfangen, und wobei das Steuerungssystem (35) dazu ausgelegt ist, das Gewicht jeder Futterart (a, b, c) der in den Halter (12) geladenen Futtercharge für die Tiere (9) zu bestimmen und auf deren Grundlage den Futterverbrauch jeder Futterart (a, b, c) aus dem Futtervorratssystem (7) zu bestimmen.

14. Fütterungssystem gemäß einem oder mehreren der Ansprüche 9-13, wobei das Futtervorratssystem (7) mit einem Futterladeplatz (16) für die Stationierung der Fütterungsvorrichtung (10) versehen ist, wenn die Futterladevorrichtung (20) Futter mindestens einer Futterart (a, b, c) aus dem Futtervorratssystem (7) in den Halter (12) der Fütterungsvorrichtung (10) überführt, und wobei das Fütterungssystem (1) mindestens einen Futterzaun (30) für die Fütterung der Tiere (9) umfasst, und wobei die Fütterungsvorrichtung (10) dazu ausgelegt ist, eine Futtercharge für die Tiere (9), die in dem Halter (12) untergebracht sind, autonom aus dem Futterladeplatz (16) zu dem Futterzaun (30) zu bewegen und das Futter autonom entlang des Futterzauns (30) auszugeben.

15. Fütterungssystem gemäß einem oder mehreren der vorhergehenden Ansprüche, wobei das Futterverbrauchsbeobachtungssystem mit einer Sensorvorrichtung (38) versehen ist, die dazu ausgelegt ist, die Futtermenge zu messen, die sich entlang eines Futterzauns (30) befindet, und wobei das Steuerungssystem (35) dazu ausgelegt ist, Werte der gemessenen Futtermenge zu empfangen, die sich entlang des Futterzauns (30) befindet, und wobei das Steuerungssystem (35) dazu ausgelegt ist, den Futterverbrauch jeder Futterart (a, b, c) aus dem Futtervorratssystem (7) basierend auf den empfangenen Werten der gemessenen Futtermenge, die sich entlang des Futterzauns (30) befindet, zu bestimmen.

16. Fütterungssystem gemäß einem oder mehreren der vorhergehenden Ansprüche, umfassend einen Futterspeicher (3) für Futter mindestens einer Futterart (a, b, c), wobei die Futtermenge jeder Futterart (a, b, c) in dem Futterspeicher (3) größer als die Futtermenge der Futterart (a, b, c) in dem Futtervorratssystem (7) ist, und wobei das Fütterungssystem dazu ausgelegt ist, Futter jeder Futterart (a, b, c) in dem Futtervorratssystem (7) mit Futter der Futterart (a, b, c) aus dem Futterspeicher (7) aufzufüllen.

17. Verfahren zum Füttern von Tieren, insbesondere von Kühen, mittels eines Fütterungssystems (1) gemäß einem oder mehreren der vorhergehenden Ansprüche.

## Revendications

1. Système de nourrissage pour nourrir des animaux (9), en particulier des vaches, comprenant :
- un système d'alimentation en nourriture (7) avec de la nourriture pour les animaux (9), laquelle nourriture comprend au moins un type de nourriture (a, b, c),
- un dispositif de nourrissage autonome (10) pour nourrir les animaux (9) avec de la nourriture provenant du système d'alimentation en nourriture (7),
- un système d'observation d'alimentation en nourriture pour observer la quantité de nourriture de chaque type de nourriture (a, b, c) dans le système d'alimentation en nourriture (7),
- un système d'observation de consommation de nourriture pour observer la consommation de nourriture de chaque type de nourriture (a, b, c) provenant du système d'alimentation en nourriture (7),
- un système de commande (35) doté d'une mémoire (35a),
le système de commande (35) étant relié au système d'observation d'alimentation en nourriture dans le but de recevoir des valeurs de la quantité observée de nourriture de chaque type de nourriture (a, b, c) dans le système d'alimentation en nourriture (7), et
le système de commande (35) étant relié au système d'observation de consommation de nourriture dans le but de recevoir des valeurs de la consommation observée de nourriture de chaque type de nourriture (a, b, c) provenant du système d'alimentation en nourriture (7), et le système de commande (35) étant configuré pour stocker lesdites valeurs reçues dans la mémoire (35a) en tant que données historiques, et
le système de commande (35) étant configuré pour prédire la consommation future de nourriture de chaque type de nourriture (a, b, c) provenant du système d'alimentation en nourriture (7) sur la base desdites données historiques stockées dans la mémoire (35a), et
le système de commande (35) étant configuré pour déterminer, pour chaque type de nourriture (a, b, c) du système d'alimentation en nourriture (7), sur la base des valeurs de la quantité observée de nourriture dudit type de nourriture (a, b, c) dans le système d'alimentation en nourriture (7) et de la consommation future prédite de nourriture dudit type de nourriture (a, b, c) provenant du système d'alimentation en nourriture (7), d'une période de temps escomptée avant que la nourriture dudit type de nourriture (a, b, c) dans le système d'alimentation en nourriture (7) commence à manquer.

2. Système de nourrissage selon la revendication 1, dans lequel le système de commande (35) comprend un écran d'affichage (39), et dans lequel le système de commande (35) est configuré pour afficher sur l'écran d'affichage (39) la période de temps escomptée avant que la nourriture dudit type de nourriture (a, b, c) dans le système d'alimentation en nourriture (7) commence à manquer.

3. Système de nourrissage selon la revendication 1 ou 2, dans lequel le système de commande (35) est configuré pour déterminer, pour chaque type de nourriture (a, b, c) du système d'alimentation en nourriture (7), sur la base des valeurs de la quantité observée de nourriture dudit type de nourriture (a, b, c) dans le système d'alimentation en nourriture (7) et de la consommation future prédite de nourriture dudit type de nourriture (a, b, c) provenant du système d'alimentation en nourriture (7), d'une quantité escomptée de nourriture dudit type de nourriture (a, b, c) devant être ajoutée au système d'alimentation en nourriture (7) dans le but de faire en sorte que la nourriture dudit type de nourriture (a, b, c) dans le système d'alimentation en nourriture (7) commence à manquer uniquement après une période de temps prédéfinie.

4. Système de nourrissage selon une ou plusieurs des revendications précédentes, dans lequel le système de commande (35) est configuré pour générer un signal d'alarme si la quantité observée de nourriture d'au moins un type de nourriture (a, b, c) dans le système d'alimentation en nourriture (7) passe sous une valeur-seuil.

5. Système de nourrissage selon une ou plusieurs des revendications précédentes, le système de nourrissage (1) étant pourvu d'un dispositif de réapprovisionnement (27) pour assurer le réapprovisionnement en nourriture d'au moins un type de nourriture (a, b, c) dans le système d'alimentation en nourriture (7), et le système de commande (35) étant relié au dispositif de réapprovisionnement (27) et étant configuré pour commander le dispositif de réapprovisionnement (27) sur la base de la période de temps escomptée avant que la nourriture dudit type de nourriture (a, b, c) dans le système d'alimentation en nourriture (7) commence à manquer.

6. Système de nourrissage selon la revendication 4 ou 5, dans lequel le système de commande (35) est configuré pour commander le dispositif de réapprovisionnement (27) sur la base de la période de temps escomptée avant que la nourriture dudit type de nourriture (a, b, c) dans le système d'alimentation en nourriture (7) commence à manquer, de telle manière que le dispositif de réapprovisionnement (27) ait assuré le réapprovisionnement en ledit type de nourriture (a, b, c) dans le système d'alimentation en nourriture (7) avant que la quantité de nourriture dudit type de nourriture (a, b, c) dans le système d'alimentation en nourriture (7) devienne inférieure à la valeur-seuil.

7. Système de nourrissage selon une ou plusieurs des revendications précédentes, dans lequel le système de commande (35) est configuré pour prédire la consommation future de nourriture de chaque type de nourriture (a, b, c) provenant du système d'alimentation en nourriture (7) sur une période de temps future comprise entre 3 et 24 heures, de préférence entre 6 et 18 heures, notamment 12 heures.

8. Système de nourrissage selon une ou plusieurs des revendications précédentes, dans lequel le système de commande (35) est configuré pour prédire la consommation future de nourriture de chaque type de nourriture (a, b, c) provenant du système d'alimentation en nourriture (7) sur la base d'une reconnaissance de schéma dans les données historiques de la consommation observée de nourriture de chaque type de nourriture (a, b, c) provenant du système d'alimentation en nourriture (7).

9. Système de nourrissage selon une ou plusieurs des revendications précédentes, dans lequel le dispositif de nourrissage (10) est pourvu d'un contenant (12) pour recevoir un lot de nourriture pour les animaux, et dans lequel il est prévu un dispositif de chargement de nourriture (20), configuré pour transférer de la nourriture d'au moins un type de nourriture (a, b, c) depuis le système d'alimentation en nourriture (7) jusque dans le contenant (12) du dispositif de nourrissage (10).

10. Système de nourrissage selon une ou plusieurs des revendications précédentes, dans lequel le système d'alimentation en nourriture (7) est pourvu d'une pluralité d'emplacements d'alimentation en nourriture (19), séparés les uns des autres, dans lequel chaque emplacement d'alimentation en nourriture (19) est configuré pour recevoir respectivement un type de nourriture (a, b, c), et dans lequel le dispositif de chargement de nourriture (20) est pourvu d'un préhenseur (24), qui est agencé de manière à être mobile dans un plan sensiblement horizontal au-dessus des emplacements d'alimentation en nourriture (19), et qui est mobile sensiblement verticalement dans le but de saisir respectivement une quantité de nourriture à partir d'un des emplacements d'alimentation en nourriture (19) et de la transférer jusqu'au contenant (12) du dispositif de nourrissage (10) pour le chargement d'un lot de nourriture pour les animaux (9) dans ledit contenant.

11. Système de nourrissage selon la revendication 10, dans lequel le système d'observation d'alimentation en nourriture est pourvu d'un dispositif d'observation (36), agencé sur le préhenseur (24) dans le but d'observer la quantité de nourriture de chaque type de nourriture (a, b, c) dans le système d'alimentation en nourriture (7).

12. Système de nourrissage selon la revendication 11, dans lequel le dispositif d'observation est configuré pour mesurer, pour chaque emplacement d'alimentation en nourriture (19), la distance jusqu'au plus haut point de la nourriture présente audit emplacement d'alimentation en nourriture (19), et dans lequel le système de commande (35) est configuré pour déterminer, sur la base de ladite distance mesurée, le poids de la nourriture présente audit emplacement d'alimentation en nourriture (19).

13. Système de nourrissage selon une ou plusieurs des revendications 9 à 12, dans lequel le système d'observation de consommation de nourriture est pourvu d'un dispositif de pesée (37), configuré pour mesurer le poids de nourriture contenue dans le contenant (12), dans lequel le système de commande (35) est relié au dispositif de pesée (37) dans le but de recevoir des valeurs du poids mesuré de nourriture contenue dans le contenant (12), et dans lequel le système de commande (35) est configuré pour déterminer le poids de chaque type de nourriture (a, b, c) du lot de nourriture pour les animaux (9) chargé dans le contenant (12) et, sur la base de celui-ci, pour déterminer la consommation de nourriture de chaque type de nourriture (a, b, c) provenant du système d'alimentation en nourriture (7).

14. Système de nourrissage selon une ou plusieurs des revendications 9 à 13, le système d'alimentation en nourriture (7) étant pourvu d'un emplacement de chargement de nourriture (16) pour le stationnement du dispositif de nourrissage (10) lorsque le dispositif de chargement de nourriture (20) transfère de la nourriture d'au moins un type de nourriture (a, b, c) depuis le système d'alimentation en nourriture (7) jusque dans le contenant (12) du dispositif de nourrissage (10), et le système de nourrissage (1) comprenant au moins un cornadis (30) pour le nourrissage des animaux (9), et le dispositif de nourrissage (10) étant configuré pour déplacer de manière autonome un lot de nourriture pour les animaux (9) contenu dans le contenant (12) depuis l'emplacement de chargement de nourriture (16) jusqu'au cornadis (30) et pour distribuer de manière autonome ladite nourriture le long du cornadis (30).

15. Système de nourrissage selon une ou plusieurs des revendications précédentes, dans lequel le système d'observation de consommation de nourriture est pourvu d'un dispositif capteur (38) configuré pour mesurer la quantité de nourriture située le long d'un cornadis (30), et dans lequel le système de commande (35) est configuré pour recevoir des valeurs de la quantité mesurée de nourriture située le long dudit cornadis (30), et dans lequel le système de commande (35) est configuré pour déterminer la consommation de nourriture de chaque type de nourriture (a, b, c) provenant du système d'alimentation en nourriture (7) sur la base desdites valeurs reçues de la quantité mesurée de nourriture située le long dudit cornadis (30).

16. Système de nourrissage selon une ou plusieurs des revendications précédentes, comprenant un stockage de nourriture (3) pour de la nourriture d'au moins un type de nourriture (a, b, c), la quantité de nourriture de chaque type de nourriture (a, b, c) dans le stockage de nourriture (3) étant supérieure à la quantité de nourriture dudit type de nourriture (a, b, c) dans le système d'alimentation en nourriture (7), et le système de nourrissage étant configuré pour réapprovisionner de la nourriture de chaque type de nourriture (a, b, c) dans le système d'alimentation en nourriture (7) en nourriture dudit type de nourriture (a, b, c) provenant du stockage de nourriture (7).

17. Procédé de nourrissage d'animaux, en particulier de vaches, au moyen d'un système de nourrissage (1) selon une ou plusieurs des revendications précédentes.
